(19) Europäisches Patentamt
European Patent Office
Office européen des brevets

(11) **EP 4 506 580 A1**

(12) **EUROPEAN PATENT APPLICATION**

(43) Date of publication:
**12.02.2025 Bulletin 2025/07**

(51) International Patent Classification (IPC):
**F16C 19/36** *(2006.01)*

(21) Application number: **24192891.0**

(22) Date of filing: **05.08.2024**

(52) Cooperative Patent Classification (CPC):
**F16C 19/364; F16C 19/383;** F16C 2240/34;
F16C 2240/40; F16C 2240/60; F16C 2240/70;
F16C 2361/61; F16C 2361/65

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.08.2023 JP 2023129589**

(71) Applicant: **Nabtesco Corporation Tokyo (JP)**

(72) Inventors:
• **Hirose, Shinya**
  **Chiyoda-ku, Tokyo (JP)**
• **Kamagata, Shuichi**
  **Chiyoda-ku, Tokyo (JP)**

(74) Representative: **Grünecker Patent- und Rechtsanwälte PartG mbB Leopoldstraße 4 80802 München (DE)**

(54) **TAPERED ROLLER BEARING AND SPEED REDUCER**

(57)    A tapered roller bearing (60) includes an inner ring (61) having an outer circumferential surface (62b), tapered rollers (65), and an outer ring (63) having an inner circumferential surface (64a). The tapered rollers (65) are held between the outer circumferential surface (62b) of the inner ring (61) and the inner circumferential surface (64a) of the outer ring (63). The outer ring (63) has a contact angle ($\alpha$) of 3° to 10°.

Fig. 3

EP 4 506 580 A1

**Description**

**TECHNICAL FIELD**

The present invention relates to a tapered roller bearing and a speed reducer.

**BACKGROUND**

Tapered roller bearings are in widespread use. Tapered roller bearings have not only radial load carrying capacity but also thrust load carrying capacity.

As disclosed in Patent Literature 1 for example, tapered roller bearings can be applied to a speed reducer. In the speed reducer disclosed in Patent Literature 1, a cylindrical roller bearing is disposed on a shaft member. The cylindrical roller bearing supports an external gear so as to be rotatable relative to the shaft member. The cylindrical roller bearing receives a radial load from the external gear. The cylindrical roller bearing under the radial load generates skew forces in the axial direction. Tapered roller bearings are located on both sides of the cylindrical roller bearing in the axial direction. The tapered roller bearings bear the axial skew forces from the cylindrical roller bearing.

Patent Literature 1: Japanese Patent Application Publication No. 2022-152790

**SUMMARY**

The loads imparted to mechanical devices including tapered roller bearings, such as speed reducers, have been increasing in recent years. This trend calls for increased capacity of tapered roller bearings. The inventors of the present invention have studied this issue and found that it is possible to improve the radial load carrying capacity of the tapered roller bearings while maintaining sufficient thrust load carrying capacity. The present invention is based on this finding and aims to improve the radial load carrying capacity of the tapered roller bearings while maintaining sufficient thrust load carrying capacity.

The invention relates to the following aspects (1) to (15).

(1) A tapered roller bearing having a contact angle of 3° to 10°.

(2) A tapered roller bearing comprising:

an inner ring;
tapered rollers; and
an outer ring having a contact angle of 3° to 10° and holding the tapered rollers with the inner ring.

(3) A tapered roller bearing comprising:

an inner ring having an outer circumferential surface;
tapered rollers; and
an outer ring having an inner circumferential surface with a contact angle of 3° to 10° and holding the tapered rollers between the outer circumferential surface and the inner circumferential surface.

(4) The tapered roller bearing of any one of (1) to (3), wherein the contact angle is 5° or larger.

(5) The tapered roller bearing of any one of (1) to (4), wherein the contact angle is 8° or smaller.

(6) The tapered roller bearing of any one of (1) to (5), wherein a product of a thickness (mm) in a radial direction and a length (mm) of the tapered rollers is 50 to 1400.

(7) The tapered roller bearing of any one of (1) to (6), wherein a product of a diameter (mm) at a small end surface of the tapered rollers and a length (mm) of the tapered rollers is 20 to 550.

(8) A speed reducer comprising:

an external gear;
a shaft member for eccentrically oscillating the external gear;
a carrier rotatably supporting the shaft member;

a cylindrical roller bearing disposed between the external gear and the shaft member; and
a tapered roller bearing disposed between the carrier and the shaft member and having a contact angle of 3° to 10°.

(9) A speed reducer of (8), comprising a casing having internal teeth that mesh with the external gear and housing at least a part of the carrier.

(10) The speed reducer of (8) or (9), wherein the contact angle is 5° or larger.

(11) The speed reducer of any one of (8) to (10), wherein the contact angle is 8° or smaller.

(12) The speed reducer of any one of (8) to (11), wherein a product of a thickness (mm) of the tapered roller bearing and a length (mm) of the tapered rollers is 50 to 1400.

(13) The speed reducer of any one of (8) to (12), wherein a product of a diameter (mm) at a small end surface of the tapered rollers and a length (mm) of the tapered rollers is 20 to 550.

(14) The speed reducer of any one of (8) to (13),

wherein the tapered roller bearing includes a first tapered roller bearing and a second tapered roller bearing arranged in an axial direction parallel to a rotation axis of the shaft member,
wherein the cylindrical roller bearing includes a first cylindrical roller bearing and a second cylindrical roller bearing disposed between the first tapered roller bearing and the second tapered roller bearing in the axial direction,
wherein the external gear includes a first external gear, supported by the first cylindrical roller bearing, and a second external gear, supported by the second cylindrical roller bearing,
wherein the first tapered roller bearing includes tapered rollers having a central axis inclined so as to be away from the rotation axis on a side closer to the second tapered roller bearing in the axial direction, and
wherein the second tapered roller bearing includes tapered rollers having a central axis inclined so as to be away from the rotation axis on a side closer to the first tapered roller bearing in the axial direction.

(15) The speed reducer of (14), wherein a distance along the axial direction between a point of action of the first tapered roller bearing and a point of action of the second tapered roller bearing is two or more times as large as an arrangement pitch of the first external gear and the second external gear in the axial direction.

The present invention improves the radial load carrying capacity of the tapered roller bearings while maintaining sufficient thrust load carrying capacity.

**BRIEF DESCRIPTION OF THE DRAWINGS**

Fig. 1 is a longitudinal sectional view of a speed reducer for describing an embodiment of the invention.

Fig. 2 is a sectional view taken along the line II-II in Fig. 1.

Fig. 3 is a partially enlarged view of Fig. 1.

Fig. 4 is a longitudinal sectional view of a tapered roller bearing shown in Fig. 3.

Fig. 5 is a plan view of a tapered roller of the tapered roller bearing shown in Fig. 4.

Fig. 6 is a graph showing the relationship between a contact angle and a basic dynamic radial load rating.

Fig. 7 shows the relationship between a contact angle, a proper preload value (proper preload (N)), and a skew force (N).

**DESCRIPTION OF THE PREFERRED EMBODIMENTS**

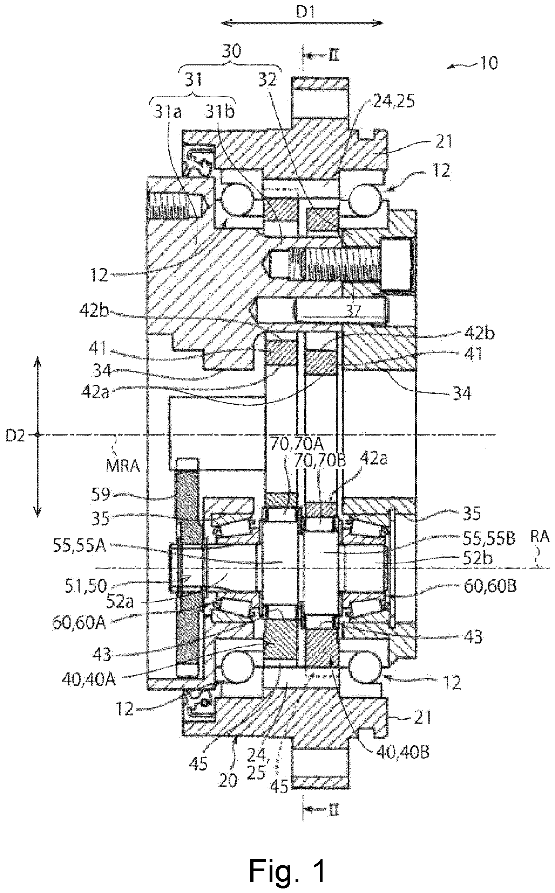

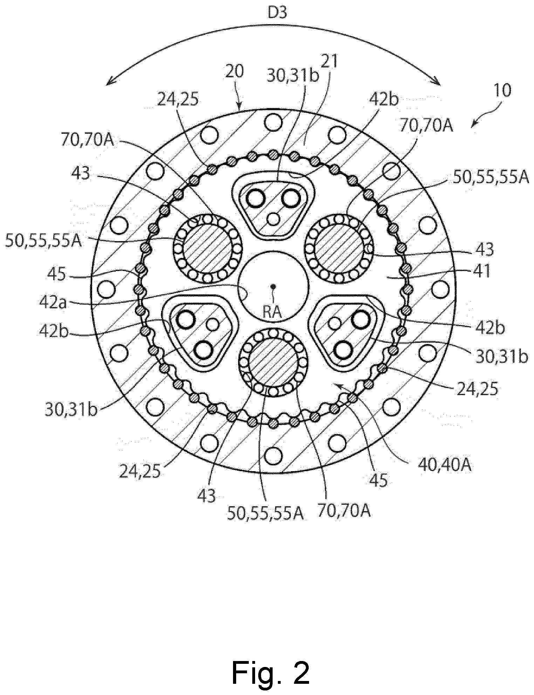

One embodiment of the invention will be hereinafter described with reference to the attached drawings. Figs. 1 to 7 are drawings for describing one embodiment of the invention. The design and components shown in some of the drawings may not be shown in other drawings. Scale and aspect ratio may differ between the drawings.

In the illustrated example, the tapered roller bearing according to the embodiment is applied to an eccentric oscillating speed reducer. This embodiment will be hereinafter described based on a speed reducer having a tapered roller bearing applied thereto. However, the tapered roller bearing is not limited to use for the eccentric oscillating speed reducer, but can be applied to various types of speed reducers. The tapered roller bearing according to the embodiment is not limited to use for speed reducers, but can be applied to various devices.

In this embodiment, the speed reducer 10 includes an external gear 40, a shaft member 50 that eccentrically oscillates the external gear 40, a carrier 30 that rotatably supports the shaft member 50, a cylindrical roller bearing 70 disposed between the external gear 40 and the shaft member 50, and a tapered roller bearing 60 disposed between the carrier 30 and the shaft member 50. The tapered roller bearing 60 is designed to improve radial load carrying capacity while maintaining the required thrust load carrying capacity. Specifically, the contact angle $\alpha$ of the tapered roller bearing 60 is 3° to 10°. As described below, with the contact angle $\alpha$ of the tapered roller bearing 60 set at 3° to 10°, it is possible to improve the radial load carrying capacity of the tapered roller bearing 60 while maintaining the required thrust load carrying capacity.

The thrust load used herein for the tapered roller bearing 60 refers to the load in a direction parallel to the rotation axis RA of the tapered roller bearing 60. Thrust load is also called axial load.

The following now describes the overall configuration of the speed reducer 10 with reference to Figs. 1 to 3. The speed reducer 10 shown further includes a casing 20. The casing 20 houses at least a part of the carrier 30. Main bearings 12 are provided between the casing 20 and the carrier 30. The casing 20 and the carrier 30 are rotatable relative to each other about a main rotation axis MRA.

The speed reducer 10 receives rotation input by a drive unit such as a motor. The speed reducer 10 reduces the input rotation and outputs the reduced rotation. The speed reducer 10 reduces the input rotation and outputs the reduced rotation in the form of the relative rotation of the casing 20 and the carrier 30. In the following description, an axial direction D1 refers to the direction parallel to the main rotation axis MRA. The carrier 30 rotatably holds the shaft member 50. The rotation axis RA of the tapered roller bearing 60 coincides with the rotation axis of the shaft member 50. The rotation axis RA of the tapered roller bearing 60 and the shaft member 50 is parallel to the axial direction D1.

The drive unit inputs rotation to the shaft member 50. The shaft member 50 includes an eccentric member 55. The center of the eccentric member 55 is off the center of rotation of the shaft member 50. The external gear 40 is penetrated by the shaft member 50. The external gear 40 is disposed on the eccentric member 55. As the shaft member 50 rotates, the external gear 40 eccentrically oscillates. The external gear 40 has external teeth 45 meshing with internal teeth 25 formed by the inner surface of the casing 20. The number of the internal teeth 25 is different from the number of the external teeth 45. Once rotation is input into the shaft member 50, the internal and external teeth 25 and 45 mesh with each other and the external gear 40 eccentrically oscillates. Because of the difference in number between the internal teeth 25 and the external teeth 45, the carrier 30 supporting the external gear 40 and the shaft member 50 rotates relative to the casing 20.

The following describes in detail the casing 20, carrier 30, external gear 40, and shaft member 50 in the stated order and their specific configurations shown in the drawings.

The casing 20 has the internal teeth 25. The internal teeth 25 are arranged next to each other in a circumferential direction DC that is centered around the main rotation axis MRA. In the illustrated example, the speed reducer 10 has two external gears 40A and 40B arranged next to each other in the axial direction D1. The internal teeth 25 each extend in the axial direction D1 and mesh with the external teeth 45 of the two external gears 40A and 40B.

As illustrated, the casing 20 includes a substantially cylindrical casing body 21 and internal tooth pins 24 held on the inner surface of the casing body 21. The casing body 21 has a plurality of pin grooves arranged next to each other in the circumferential direction DC. The pin grooves extend in the axial direction D1 and accommodate and hold the internal tooth pins 24 having a circular cylindrical shape. Each internal tooth pin 24 constitutes one internal tooth 25.

The carrier 30 is held in the casing 20 via a pair of main bearings 12. The carrier 30 is rotatable relative to the casing 20 about the main rotation axis MRA. The illustrated carrier 30 includes a carrier base 31 and a carrier plate 32 fixedly attached to each other. The carrier base 31 and carrier plate 32 can be secured to each other using bolts or other fasteners. The carrier base 31 includes a base plate 31a shaped like a disk and a plurality of columns 31b protruding in the axial direction D1 from the base plate 31a. The base plate 31a and columns 31b may be integrated with each other. The columns 31b may be arranged at equal intervals in the circumferential direction DC that is centered around the main rotation axis MRA. In the illustrated example, three columns 31b are provided.

The illustrated carrier 30 has a center hole 34 and through holes 35. The center hole 34 and through holes 35 extend through the carrier base 31 and carrier plate 32. The center hole 34 is located on the main rotation axis MRA. The carrier 30 has a plurality of through holes 35. The through holes 35 are arranged at equal intervals in the circumferential direction DC that is centered around the main rotation axis MRA.

The shaft member 50 is rotatably held by the carrier 30. As illustrated, the shaft member 50 is inserted into each of the through holes 35 in the carrier 30. A pair of tapered roller bearings 60 are disposed between the carrier 30 and the shaft member 50. Via the tapered roller bearings 60, the shaft member 50 is rotatable relative to the carrier 30 about the rotation axis RA. The rotation axis RA is parallel to the axial direction D1. The illustrated speed reducer 10 has a plurality of shaft members 50 inserted in the plurality of through holes 35, respectively. The shaft members 50 are arranged at equal intervals in the circumferential direction DC that is centered around the rotation axis MRA. In the example shown, three through holes 35 are formed. In the example shown, three shaft members 50 are provided.

The shaft members 50 illustrated each include a shaft body 51 and a pair of eccentric members 55 provided on the shaft body 51. The eccentric members 55 are shaped like a circular column. The eccentric members 55 have a larger diameter than the shaft body 51. The center of each eccentric member 55 is off the center of rotation of the shaft member 50, or the rotation axis RA. The pair of eccentric members 55 is constituted by a first eccentric member 55A and a second eccentric member 55B. The centers of the first and second eccentric members 55A and 55B are off the rotation axis RA in opposite directions by the same amount. In other words, in the section perpendicular to the axial direction D1, the center of the first eccentric member 55A and the center of the second eccentric member 55B are located symmetrically with respect to one point on the rotation axis RA.

The shaft body 51 has a first bearing support 52a that is inserted into the carrier base 31 and a second bearing support 52b that is inserted into the carrier plate 32. The bearing supports 52a and 52b support first and second tapered roller bearings 60A and 60B, respectively. The eccentric members 55A and 55B are located between the bearing supports 52a and 52b in the axial direction D1. The shaft member 50 illustrated further includes an input gear 59 fixedly attached to the shaft body 51. In the illustrated example, the input gear 59, the first bearing support 52a, first eccentric member 55A, second eccentric member 55B, and second bearing support 52b are arranged in this order in the axial direction D1.

In the illustrated speed reducer 10, the external gear 40 is constituted by a first external gear 40A and a second external gear 40B. The first external gear 40A is located on the first eccentric members 55A of the shaft members 50. The second external gear 40B is located on the second eccentric members 55B of the shaft members 50. The first and second external gears 40A and 40B are located, in the axial direction D1, between the base plate 31a of the carrier base 31 and the carrier plate 32.

The illustrated external gear 40 includes a disk-shaped central plate 41 and external teeth 45 arranged around the periphery of the central plate 41. The central plate 41 has a center hole 42a and column pass holes 42b. The center hole 42a is located on the main rotation axis MRA. The center hole 42a faces the center hole 34 in the axial direction D1. In the illustrated example, the column pass holes 42b are arranged at equal intervals in the circumferential direction DC that is centered around the center hole 42a. The columns 31b of the carrier 30 penetrate the column pass holes 42b. In the example shown, three column pass holes 43 are formed.

The central plate 41 further has holes 43. In the illustrated example, the three holes 43 are arranged at equal intervals in the circumferential direction DC that is centered around the center hole 42a. The holes 43 receive the eccentric members 55. Cylindrical roller bearings 70 are provided between the eccentric members 55 and the external gear 40. The first external gear 40A is supported on the first eccentric member 55A of each shaft member 50 via first cylindrical roller bearing 70A. The second external gear 40B is supported on the second eccentric member 55B of each shaft member 50 via a second cylindrical roller bearing 70B.

The external gear 40 is supported by the three eccentric members 55. The eccentric members 55 of the three shaft members 50 are in phase. Therefore, as the three shaft members 50 rotate, the external gear 40 eccentrically oscillates. In other words, as the three shaft members 50 rotate, the external gear 40 translates along a circumferential path that is centered around the main rotation axis MRA. The first and second external gears 40A and 40B are shifted by half a phase.

Having the above-described configuration, the speed reducer 10 receives rotation input by a drive unit such as a motor. For example, the output gear of the drive unit is located on the main rotation axis MRA and meshes with the input gears 59 of the three shaft members 50. As the output gear rotates, the shaft members 50 rotate along with the input gears 59, which causes the external gear 40 to eccentrically oscillate. Here, the external teeth 45 of the external gear 40 mesh with the internal teeth 25 of the casing 20. Because of the difference in number between the external teeth 45 and the internal teeth 25, the carrier 30, which supports the external gear 40 via the shaft members 50, and the casing 20 rotate relative to each other around the main rotation axis MRA. When the casing 20 is stationary, the rotation of the carrier 30 is output. When the carrier 30 is stationary, the rotation of the casing 20 is output.

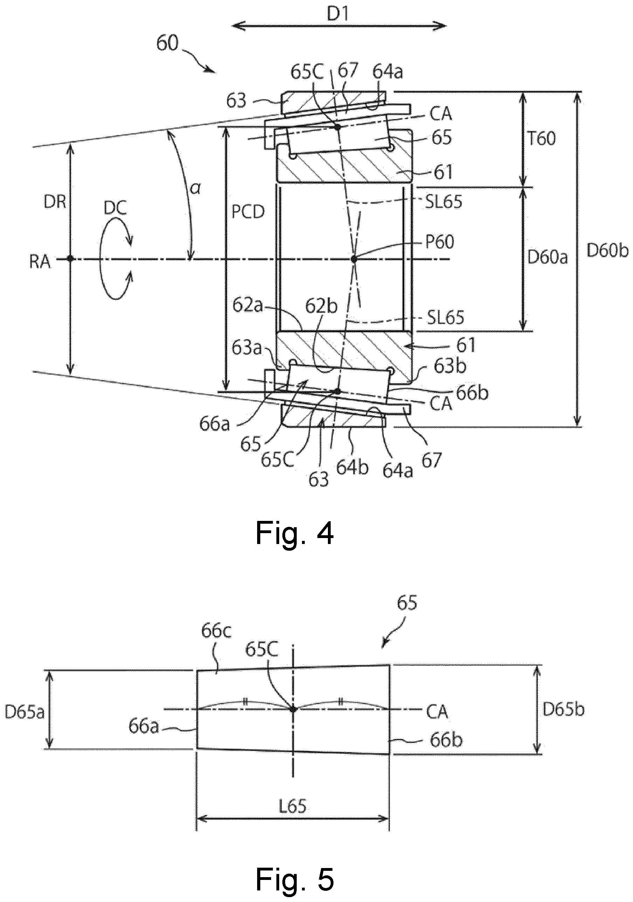

The following describes the tapered roller bearing 60. As shown in Figs. 4 and 5, the tapered roller bearing 60 includes an inner ring 61 and an outer ring 63, and tapered rollers 65 located between the inner ring 61 and the outer ring 63. The tapered roller bearing 60 may further include a cage 67 that holds the tapered rollers 65.

The inner ring 61 has an annular shape. The inner ring 61 extends in the circumferential direction DC along the circumference centered around the rotation axis RA. The inner ring 61 includes an inner circumferential surface 62a and an outer circumferential surface 62b. The inner circumferential surface 62a and the outer circumferential surface 62b are opposed to each other in the radial direction DR perpendicular to the rotation axis RA. The inner circumferential surface 62a faces the inside in the radial direction DR. The outer circumferential surface 62b faces the outside in the radial direction. The inside in the radial direction DR refers to the side closer to the rotation axis RA in the radial direction DR. The outside in the radial direction DR refers to the side farther from the rotation axis RA in the radial direction DR.

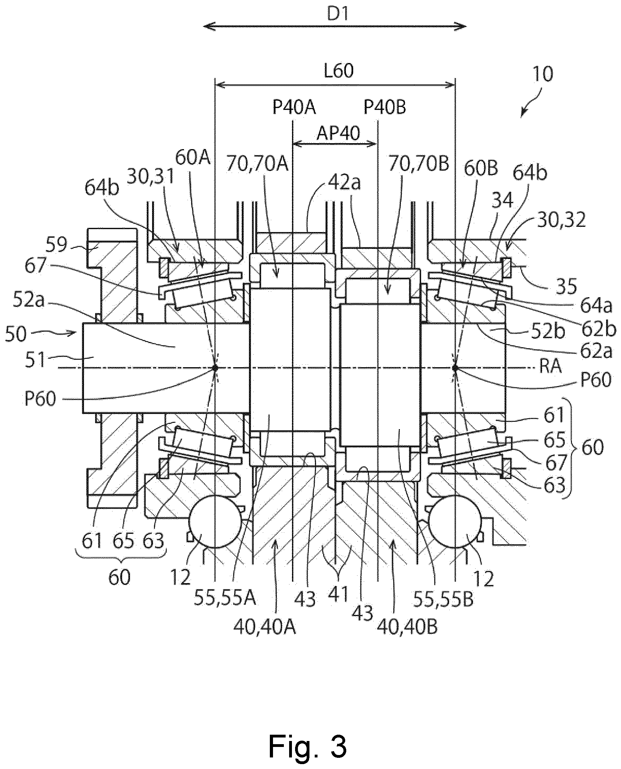

The inner circumferential surface 62a may be perpendicular to the radial direction DR. The inner circumferential surface 62a may be parallel to the axial direction D1. The inner circumferential surface 62a may be in contact with the shaft member 50. In the example shown in Fig. 3, the inner circumferential surface 62a is in contact with the first bearing support 52a of the shaft body 51. The inner ring 61 is located on the first bearing support 52a of the shaft body 51. The inner ring 61 may be in contact with the shaft member 50, such that the first cylindrical roller bearing 70 is held on the shaft member 50.

The outer circumferential surface 62b is in contact with the tapered rollers 65. The outer circumferential surface 62b forms the raceway of the tapered rollers 65. The outer surface 62b is inclined relative to the rotation axis RA. In the example shown in Fig. 3, the outer circumferential surface 62b of the inner ring 61 of the first tapered roller bearing 60A is away from the rotation axis RA in the radial direction DR, toward the first cylindrical roller bearing 70A and the first eccentric member 55A along the axial direction D1. The outer circumferential surface 62b of the inner ring 61 of the second tapered roller bearing 60B is away from the rotation axis RA in the radial direction DR, toward the second cylindrical roller bearing 70B and the second eccentric member 55B along the axial direction D1.

The outer ring 63 has an annular shape. The outer ring 63 extends in the circumferential direction DC. The outer ring 63 includes an inner circumferential surface 64a and an outer circumferential surface 64b The inner circumferential surface 64a and the outer circumferential surface 64b are opposed to each other in the radial direction DR. The inner circumferential surface 64a faces the inside in the radial direction DR. The outer circumferential surface 64b faces the outside in the radial direction.

The outer circumferential surface 64b may be perpendicular to the radial direction DR. The outer circumferential surface 64b may be parallel to the axial direction D1. The inner circumferential surface 64a may be in contact with the shaft member 50. In the example shown in Fig. 3, the outer circumferential surface 64b is in contact with the inner surface of the through hole 35 of the carrier 30. The outer ring 63 is located in the through hole 35 of the carrier 30. The outer ring 63 may be fitted into the through hole 35 of the carrier 30, so that the tapered roller bearing 60 is held on the carrier 30.

The inner circumferential surface 64a is in contact with the tapered rollers 65. The inner circumferential surface 64a forms the raceway of the tapered rollers 65. The inner surface 64a is inclined relative to the rotation axis RA. In the example shown in Fig. 3, the inner circumferential surface 64a of the outer ring 63 of the first tapered roller bearing 60A is away from the rotation axis RA in the radial direction DR, toward the first cylindrical roller bearing 70A and the first eccentric member 55A along the axial direction D1. The inner circumferential surface 64a of the outer ring 63 of the second tapered roller bearing 60B is away from the rotation axis RA in the radial direction DR, toward the second cylindrical roller bearing 70B and the second eccentric member 55B along the axial direction D1.

A plurality of tapered rollers 65 are disposed between the inner ring 61 and the outer ring 63. The plurality of tapered rollers 65 are spaced in the circumferential direction DC. The plurality of tapered rollers 65 are positioned relative to each other by the cage 67. The cage 67 may be, for example, an annular member with a plurality of holes receiving the tapered rollers 65.

The tapered rollers 65 are shaped like a truncated cone or a chamfered truncated cone. The apexes of the truncated cones constituting the tapered rollers 65 are located on the rotation axis RA. The apexes of the truncated cones constituting the tapered rollers 65 included in the tapered roller bearing 60 are located at the same position on the rotation axis RA. The truncated cone is obtained by cutting a cone with a plane parallel to the base of the cone. In this specification, the apex of a truncated cone refers to the apex of the uncut cone.

As shown in Fig. 5, the tapered rollers 65 each include a small end surface 66a, a large end surface 66b, and a side surface 66c. The side surface 66c is located between the small end surface 66a and the large end surface 66b. The large end surface 66b is the larger of the two bases of the truncated cone that constitutes the tapered roller 65. The small end surface 66a is the smaller of the two bases of the truncated cone that constitutes the tapered roller 65. In the illustrated example, the large end surface 66b has a circular shape. In the illustrated example, the small end surface 66a has a circular shape.

The large end surface 66b of the tapered roller 65 included in the first tapered roller bearing 60A shown in Fig. 3 faces toward the first cylindrical roller bearing 70A and the first eccentric member 55A in the axial direction D1. The large end surface 66b of the tapered roller 65 included in the second tapered roller bearing 60B shown in Fig. 3 faces toward the second cylindrical roller bearing 70B and the second eccentric member 55B in the axial direction D1.

The tapered roller 65 has a central axis CA. The tapered roller 65 rotates about the central axis CA between the inner ring 61 and the outer ring 63. In the illustrated example, the central axis CA extends through the center of the small end surface 66a. In the illustrated example, the central axis CA extends through the center of the large end surface 66b. The central axis CA of the tapered roller 65 included in the first tapered roller bearing 60A shown in Fig. 3 is away from the rotation axis RA in the radial direction DR, toward the first cylindrical roller bearing 70A and the first eccentric member 55A along the axial direction D1. The central axis CA of the tapered roller 65 included in the second tapered roller bearing 60B shown in Fig. 3 is away from the rotation axis RA in the radial direction DR, toward the second cylindrical roller bearing 70B and the second eccentric member 55B along the axial direction D1.

The tapered roller bearing 60 can bear loads from one side in the axial direction. The tapered roller bearing 60 can bear loads applied to the inner ring 61 from the large end surface 66b side in the axial direction D1. The tapered roller bearing 60 can bear loads applied to the outer ring 63 from the small end surface 66a side in the axial direction D1.

As shown in Figs. 1 and 3, the two tapered roller bearings 60A and 60B are arranged in the speed reducer 10 in opposite orientations such that their central axes CA coincide with each other. The two tapered roller bearings 60A and 60B are arranged such that the large end surfaces 66b of the tapered rollers 65 are opposed to each other. The cylindrical roller bearing 70 is located between the two tapered roller bearings 60A and 60B. The cylindrical roller bearing 70 is located on the eccentric member 55. The external gear 40 is located on the cylindrical roller bearing 70. In the illustrated example, two cylindrical roller bearings 70A and 70B are located between the two tapered roller bearings 60A and 60B. The first tapered roller bearing 60A, the first cylindrical roller bearing 70A, the second cylindrical roller bearing 70B, and the second tapered roller bearing 60B are arranged in this order in the axial direction D1.

During operation of the speed reducer 10, the cylindrical roller bearing 70 located between the eccentric member 55 and the external gear 40 is subjected to a radial load from a radial direction perpendicular to the rotation axis of the cylindrical roller bearing 70. The cylindrical roller bearing 70 subjected to the radial load generates a skew force in the direction along the rotation axis thereof. In a typical speed reducer 10, the radial load applied to the cylindrical roller bearing 70 is 3000 N to 50000 N. The skew force was found to be about 5% of the radial load. Therefore, the skew force generated in the cylindrical roller bearing 70 during operation of the speed reducer 10 is typically 150 N to 2500 N.

The skew force is applied as a thrust load to the tapered roller bearing 60 by the inner or outer ring of the cylindrical roller bearing 70. In another example, the skew force is applied as a thrust load to the tapered roller bearing 60 by the eccentric member 55 fixed to the inner ring of the cylindrical roller bearing 70 or the external gear 40 fixed to the outer ring of the same. In the illustrated example, the two tapered roller bearings 60A and 60B are configured so that the large end surfaces 66b of the tapered rollers 65 face toward the cylindrical roller bearing 70 in the axial direction D1. Furthermore, the two tapered roller bearings 60A and 60B are configured so that the inner rings 61 project beyond the outer rings 63 toward the cylindrical roller bearing 70 in the axial direction D1. The two tapered roller bearings 60A, 60B are subjected to a thrust load generated by the skew force on their respective inner rings 61 and bear the thrust load without substantially moving in the axial direction D1.

As shown in Fig. 4 and other drawings, the inner ring 61 may include at least one of small and large flanges 63a and 63b. The small flange 63a is provided on the outer circumferential surface 62b of the inner ring 61. The small flange 63a contacts the small end surfaces 66a of the tapered rollers 65 to restrain the movement of the tapered rollers 65 relative to the inner ring 61 in the axial direction D1. The large flange 63b contacts the large end surfaces 66b of the tapered rollers 65 to restrain the movement of the tapered rollers 65 relative to the inner ring 61 in the axial direction D1.

The loads imparted to mechanical devices including tapered roller bearings 60, such as speed reducers, have been increasing in recent years. This trend calls for increased capacity of tapered roller bearings. To solve this problem, the contact angle $\alpha$ of the tapered roller bearing 60 in this embodiment is 3° to 10°. As shown in Fig. 4, the contact angle $\alpha$ is the angle between the inner circumferential surface 64a of the outer ring 63 and the rotation axis RA. The contact angle $\alpha$ is in a range from 0° to 90°.

The contact angle $\alpha$ of tapered roller bearings has conventionally been set to be greater than 10°, for example, 15° or greater, or 20° or greater. The reason why the contact angle $\alpha$ was set to be so large is that it was considered necessary to ensure sufficient thrust load carrying capacity of the tapered roller bearing, which is used in place of a cylindrical roller bearing. The contact angle specified in "5 Dimension Series a)" of JISB1512-3:2011, which specifies tapered roller bearings, is in the range exceeding 10° and less than 30°. Thus, even in the JIS standard, the contact angle is not supposed to be 10° or less.

However, the inventors have diligently examined and confirmed that a tapered roller bearing 60 with a contact angle $\alpha$ of 10° or less has sufficient thrust load carrying capacity, depending on the application of the tapered roller bearing 60. For example, for a tapered roller bearing 60 to which no large thrust load is applied, the contact angle $\alpha$ may be 10° or less. For a tapered roller bearing 60 used alongside a cylindrical roller bearing, the contact angle $\alpha$ may be 10° or less. For a tapered roller bearing 60 that receives a skew force from a cylindrical roller bearing, the contact angle $\alpha$ may be 10° or less. For a tapered roller bearing 60 that supports the same support member as a cylindrical roller bearing, the contact angle $\alpha$ may be 10° or less. For a tapered roller bearing 60 that supports a crankshaft (shaft member 50) of an eccentric oscillating speed reducer, the contact angle $\alpha$ may be 10° or less. It was confirmed that a tapered roller bearing 60 with a contact angle $\alpha$ of 10° or less has sufficient thrust load carrying capacity to support an eccentric shaft of a speed reducer.

With the contact angle $\alpha$ set to 10° or less, which is smaller than conventional values, the tapered rollers 65 can have a larger thickness without increasing the thickness T60 of the tapered roller bearing 60. With the contact angle $\alpha$ set to 10° or less, which is smaller than conventional values, the inner ring 61 can have a larger thickness in the radial direction DR without increasing the thickness T60 of the tapered roller bearing 60. With the contact angle $\alpha$ set to 10° or less, which is smaller than conventional values, the outer ring 63 can have a larger thickness in the radial direction DR without increasing the thickness T60 of the tapered roller bearing 60. According to any of these, the radial load carrying capacity of the tapered roller bearing 60 can be efficiently improved without increasing the thickness T60 of the tapered roller bearing 60.

As shown in Fig. 4, the thickness T60 of the tapered roller bearing 60 is the distance along the radial direction DR between the inner circumferential surface 62a of the inner ring 61 and the outer circumferential surface 64b of the outer ring 63.

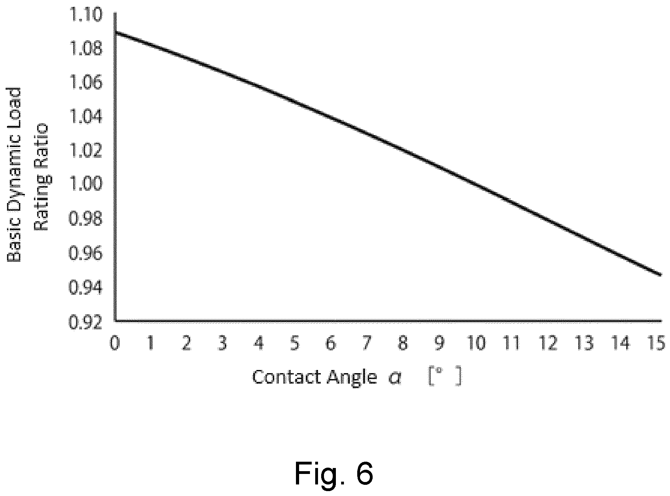

As shown in Table 1 and Fig. 6, a smaller contact angle α significantly improves the radial load carrying capacity. As shown in Table 1, a smaller contact angle α significantly reduces a drive torque. As shown in Table 1, a smaller contact angle α significantly extends the life of the tapered roller bearing 60 and the speed reducer 10 containing the tapered roller bearing 60.

Table 1: Evaluation Results of Load Carrying Capacity

| Contact Angle α [°] | Basic Dynamic Load Rating Ratio | Bearing Span Ratio | Bearing Load Ratio | Life Ratio | Drive Torque Ratio | Life | Drive Torque |
|---|---|---|---|---|---|---|---|
| 13 | 0.969 | 0.919 | 1.023 | 0.83 | 1.294 | B | B |
| 12 | 0.979 | 0.947 | 1.015 | 0.89 | 1.196 | B | B |
| 11 | 0.990 | 0.974 | 1.001 | 0.94 | 1.098 | B | B |
| 10 | 1 | 1 | 1 | 1 | 1 | A | A |
| 9 | 1.010 | 1.026 | 0.993 | 1.06 | 0.901 | A | A |
| 8 | 1.020 | 1.052 | 0.987 | 1.12 | 0.802 | AA | AA |
| 7 | 1.029 | 1.077 | 0.981 | 1.17 | 0.702 | AA | AA |
| 6 | 1.039 | 1.102 | 0.975 | 1.23 | 0.603 | AA | AA |
| 5 | 1.048 | 1.126 | 0.970 | 1.29 | 0.503 | AA | AA |
| 4 | 1.057 | 1.150 | 0.965 | 1.35 | 0.402 | AA | AA |
| 3 | 1.066 | 1.174 | 0.960 | 1.41 | 0.302 | AA | AA |
| 2 | 1.074 | 1.198 | 0.956 | 1.41 | 0.201 | AA | AA |
| 1 | 1.082 | 1.221 | 0.952 | 1.54 | 0.101 | AA | AA |

The "basic dynamic load rating" in Table 1 relates to the basic dynamic radial load rating calculated from the theoretical equation based on JISB1518:2013. Table 1 and Fig. 6 show the relationship between the contact angle α and the basic dynamic load rating ratio.

The "basic dynamic load rating" is the radial load withstood by the bearing for its basic rated life of one million rotations. Therefore, the "basic dynamic load rating" is an indicator of the radial load carrying capacity of the tapered roller bearing. In Table 1 and Fig. 6, the basic dynamic load rating is evaluated relatively, by varying the contact angle α, the thickness of the inner ring 61, and the thickness of the outer ring 63, while keeping the thickness T60 of the tapered roller bearing 60 and the dimensions of the tapered rollers 65 constant.

As shown in Table 1 and Fig. 6, the basic dynamic load rating increases as the contact angle α is smaller. In other words, with the contact angle α of 10° or less, which is smaller than the conventional values, the radial load carrying capacity of the tapered roller bearing 60 can be improved.

The "bearing span ratio" in Table 1 is the relative ratio of the bearing span L60. The "bearing span ratio" in Table 1 shows the variation of bearing span L60 as a function of the contact angle α. The bearing span L60 is the distance in the direction parallel to the central axis CA between the point of action P60 of the first tapered roller bearing 60A and the point of action P60 of the second tapered roller bearing 60B applied to the speed reducer 10 shown in Figs. 1 to 3.

As shown in Fig. 4, the point of action P60 of the tapered roller bearing 60 is located on the rotation axis RA of the tapered roller bearing 60. The point of action P60 is located at the intersection of the straight line SL65 perpendicular to the central axis CA of the tapered roller 65 and the rotation axis RA of the tapered roller bearing 60. The straight line SL65 extends through the center 65C of the tapered roller 65. The center 65C of the tapered roller 65 is located on the central axis CA of the tapered roller 65. The distance from the center 65C to the small end surface 66a along the central axis CA and the distance from the center 65C to the large end surface 66b along the central axis CA are equal. In calculating the bearing span ratios shown in Table 1, each dimension of the speed reducer 10 was supposed to be a common dimension for speed reducers with outputs of 1000 Nm to 2000 Nm.

In the example shown in Figs. 1 to 3, the shaft member 50 and the cylindrical roller bearing 70 are subjected to radial loads from the external gears 40A and 40B. The central positions of the radial loads from the external gears 40A and 40B in the axial direction D1 are the central positions P40A and P40B of the external gears 40A and 40B in the axial direction D1. The tapered roller bearings 60A and 60B are subjected to radial loads from the shaft member 50. The central positions in the axial direction D1 of the radial loads that the tapered roller bearings 60A and 60B receive from the shaft member 50 are the points of action P60 of the tapered roller bearings 60A and 60B.

The "bearing load ratio" in Table 1 is the ratio of the radial load applied to the tapered roller bearing 60 at each contact angle $\alpha$. The radial load at each contact angle $\alpha$ is obtained by calculation. In calculating the radial load, only the contact angle $\alpha$ and the bearing span L60 were varied, while other conditions (e.g., configuration of the shaft member 50, configuration of the cylindrical roller bearing 70, configuration of the external gears 40A and 40B, the radial loads from the external gears 40A and 40B) were kept constant regardless of the contact angle $\alpha$ and the bearing span L60.

As shown in Table 1, the bearing span L60 can be increased as the contact angle $\alpha$ is smaller. With the contact angle $\alpha$, the bearing span L60 can be increased while keeping the length of the shaft member 50 in the axial direction D1 constant.

As shown in Table 1, the bearing load ratio can be reduced by increasing the bearing span L60. In other words, the bearing load ratio can be reduced by reducing the contact angle $\alpha$. Specifically, with the contact angle $\alpha$ of 10° or less, which is smaller than the conventional values, the radial load carrying capacity can be improved.

The "life ratio" in Table 1 shows the ratio of the rated life of the tapered roller bearing 60 used in the speed reducer 10 shown in Figs. 1 to 3. The rated life is calculated by the formula specified in JIS (Japanese Industrial Standard). The rated life is proportional to the 10/3 power of the ratio of the basic dynamic load rating of the tapered roller bearing 60 to the radial load applied to each tapered roller bearing 60 at the point of action P60.

As described above, the basic dynamic load rating of the tapered roller bearing 60 can be increased by reducing the contact angle $\alpha$. The radial load applied to the tapered roller bearing 60 built in the speed reducer 10 shown in Figs. 1 to 3 (the bearing load ratio in Table 1) can be reduced by reducing the contact angle $\alpha$. The rated life is proportional to the 10/3 power of the ratio of the applied radial load to the basic dynamic rated load. Based on these, a smaller contact angle $\alpha$ significantly extends the rated life. Specifically, with the contact angle $\alpha$ of 10° or less, which is smaller than the conventional values, the radial load carrying capacity can be improved significantly.

The "drive torque ratio" in Table 1 is the ratio of the drive torque required to start the tapered roller bearing. Drive torque is also called starting torque. The drive torque required to start the tapered roller bearing may be affected by sliding friction between the large end surface 66b of the tapered roller 65 and the large flange 63b of the inner ring 61, rolling friction between the tapered roller 65 and the outer circumferential surface 62b of the inner ring 61 and the inner circumferential surface 64a of the outer ring 63, sliding friction between the tapered roller 65 and the cage 67, and the like. Among these, the sliding friction between the large end surface 66b of the tapered roller 65 and the large flange 63b of the inner ring 61 is decisive for the torque required to start the tapered roller bearing. The "drive torque ratio" in Table 1 is the ratio of the drive torque at each contact angle $\alpha$ calculated from the sliding friction between the large end surface 66b of the tapered roller 65 and the large flange 63b of the inner ring 61.

The drive torque is affected by the friction of parts caused by the preload described below. As described below, there is a proper value for preload, and the proper preload value can be reduced by reducing the contact angle. As a result, as shown in Table 1, the drive torque can be effectively reduced by reducing the contact angle $\alpha$. A reduced drive torque extends the life of the tapered roller bearing 60 and the speed reducer 10 having the tapered roller bearing 60 built therein. Specifically, with the contact angle $\alpha$ of 10° or less, which is smaller than the conventional values, the radial load carrying capacity can be improved.

The illustrated speed reducer 10 may be assembled as follows. The first step is to prepare the shaft member 50 having the inner ring 61, the tapered rollers 65, and the cage 67 mounted on each of the bearing supports 52a and 52b. This shaft member 50 may also have the tapered roller bearing 60 mounted thereon. Next, the shaft member 50 is inserted into a hole 43 of the external gear 40. The maximum circumcircle of the tapered rollers 65 located on the shaft member 50 needs to be smaller than the inside diameter of the hole 43. The shaft member 50, which extends through the hole 43, is then inserted into the outer ring 63 mounted in the through hole 35 of the carrier 30. The outer ring 63 is contacted by the tapered rollers 65 to assemble the tapered roller bearing 60. Through this tapered roller bearing 60, the shaft member 50 is rotatably held by the carrier 30.

With the contact angle $\alpha$ set to 10° or less, which is smaller than conventional values, the diameter of the circumference on which the tapered rollers 65 are located (hereinafter referred to as "the pitch circle diameter") can be increased without increasing the maximum circumcircle of the tapered rollers 65 and without making the tapered rollers 65 thinner. The pitch circle diameter PCD is equal to twice the length (pitch circle radius) along the radial direction DR from the center 65C of each tapered roller 65 arranged along the circumference centered around the rotation axis RA to the rotation axis RA.

With a larger pitch circle diameter PCD of the tapered rollers 65, the diameter of the rolling surface (outer circumferential surface 62b) of the inner ring 61 can be increased without increasing the outer diameter D60b (see Fig. 4) of the tapered roller bearing 60. The bearing transfer surface can be enlarged as the rolling surface of the inner ring 61 has a larger diameter. In other words, with the contact angle $\alpha$ of 10° or less, which is smaller than the conventional values, the radial load carrying capacity of the tapered roller bearing can be improved through a larger pitch circle diameter PCD of the tapered rollers 65.

Tapered roller bearings were actually fabricated and built into the speed reducer having the configuration shown in Figs. 1 to 3, and the life and drive torque were measured for these tapered roller bearings. Tapered roller bearings having varied contact angles $\alpha$ were evaluated by comparison with a reference bearing having a contact angle $\alpha$ of 20°.

The "Life" column of Table 1 shows the results of the evaluation of the tapered roller bearings having the varied contact angles $\alpha$, according to the following criteria.

AA: The life was 1.4 or more times as long as the life of the reference bearing.
A: The life was 1.2 or more times as long as the life of the reference bearing.
B: The life was less than 1.2 times as long as the life of the reference bearing.

The "Drive Torque" column of Table 1 shows the results of the evaluation of the tapered roller bearings having the varied contact angles $\alpha$, according to the following criteria.

AA: The drive torque was 0.70 or less times as large as the drive torque of conventional tapered roller bearings.
A: The drive torque was 0.85 or less times as large as the drive torque of conventional tapered roller bearings.
A: The drive torque was more than 0.85 times as large as the drive torque of conventional tapered roller bearings.

According to the results shown in Table 1, with the contact angle $\alpha$ of 10° or less, which is smaller than the conventional values, the radial load carrying capacity of the tapered roller bearing 60 can be improved. To significantly improve the radial load carrying capacity compared to conventional tapered roller bearings, it is preferable to set the contact angle $\alpha$ to 8° or smaller, and it is more preferable to set the contact angle $\alpha$ to 7° or smaller.

In the tapered roller bearings evaluated in Table 1 and Fig. 6, the thickness T60 of the tapered roller bearing 60, the configuration of the tapered rollers 65, and the pitch circle diameter PCD were kept constant, regardless of the variation of the contact angle $\alpha$. On the other hand, the thickness of the inner ring 61 and the thickness of the outer ring 63 were varied in accordance with the variation of the contact angle $\alpha$.

As described above, with the contact angle $\alpha$ of 10° or less, which is smaller than the conventional values, the radial load carrying capacity can be improved. On the other hand, a smaller contact angle $\alpha$ results in lower thrust load carrying capacity. In this embodiment, the lower limit of the contact angle $\alpha$ is 3°. With the contact angle $\alpha$ of 3° or larger, sufficient thrust load carrying capacity can be ensured.

In actual use, the tapered roller bearing 60 is not subjected to radial or axial loads alone, but is subjected to radial and axial loads acting in combination. Evaluation of the life of the tapered roller bearing 60 in such use is based on the dynamic equivalent load, also specified in JISB1518:2013.

The dynamic equivalent load is a hypothetical load that will result in the same life as the life of the tapered roller bearing 60 acted on by the combined load. One known example of the dynamic equivalent load is dynamic equivalent radial load. The dynamic equivalent radial load is a hypothetical radial load that will result in the same life as the life of the tapered roller bearing 60 acted on by the combined load.

As specified in JISB1518:2013, it is known that the dynamic equivalent radial load is calculated by the following Formula X.

$$P_r = X \times F_r + Y \times F_s \quad \cdot \cdot \cdot \text{ Formula X}$$

In Formula X, $F_r$ is the radial load acting on the tapered roller bearing 60. $F_s$ is the thrust load acting on the tapered roller bearing 60. X is the radial load coefficient, and Y is the thrust load coefficient. The radial load coefficient X and the thrust load coefficient Y are determined by the ratio of the thrust load $F_s$ to the radial load $F_r$ ($F_s/F_r$). It is known that X=1 and Y=0 when the ratio of $F_s/F_r$ is less than or equal to the value e determined by the type of the bearing.

When $F_s/F_r \leq e$, only the radial load $F_r$ affects the life of the tapered roller bearing 60, and the thrust load $F_s$ can be ignored. The value e for the tapered roller bearing is $1.5 \times \tan \alpha$, which uses the contact angle $\alpha$. When an appropriate contact angle $\alpha$ is selected in accordance with the radial load $F_r$ and the thrust load $F_s$ acting on the tapered roller bearing 60 in use, the thrust load $F_s$ can be ignored. In other words, when the contact angle $\alpha$ is selected appropriately in accordance with the application of the tapered roller bearing 60, the thrust load carrying capacity of the tapered roller bearing 60 can be sufficient.

In the application to the speed reducer 10 shown in Figs. 1 to 3, the tapered roller bearing 60 is subjected to the radial load $F_r$ applied from the shaft member 50 and is subjected to the skew force as the thrust load $F_s$ produced by the

cylindrical roller bearing 70. According to the inventors' study, the ratio of the thrust load $F_s$ to the radial load $F_r$ ($F_s/F_r$) was confirmed to be 0.06 or 0.07.

When the contact angle $\alpha$ is 3°, the value e expressed by $1.5 \times \tan\alpha$ is 0.079. When the contact angle $\alpha$ is 2°, the value e expressed by $1.5 \times \tan\alpha$ is 0.052. Therefore, for the tapered roller bearing 60 with a contact angle $\alpha$ of 3° or larger, the thrust load $F_s$ can be ignored in the evaluation of life. In other words, the tapered roller bearing 60 with a contact angle $\alpha$ of 3° or larger holds the required thrust load carrying capacity.

In this regard, the contact angle $\alpha$ may be from 3° to 10°, from 3° to 8°, or from 3° to 7°.

The tapered roller bearing 60 may be preloaded at the time of use. Specifically, the tapered roller bearing 60 may be built into the subject device, or the speed reducer 10 in the illustrated example, with the inner ring 61 and the outer ring 63 pressured toward each other in the direction D1 along the rotation axis RA. The inner ring 61 and the outer ring 63 are pressurized toward each other to suppress abnormalities such as rattling and vibration when the tapered roller bearing 60 is in use. Suppressing such abnormalities extends effectively the life of the tapered roller bearing 60 and the life of the device having the tapered roller bearing 60 built therein, e.g., the speed reducer 10.

There is a proper value for the preload applied to the tapered roller bearing 60. The tapered roller bearing 60 preloaded to a proper value has no gap between the tapered rollers 65 and the inner and outer rings 61 and 63. It is preferable that all the tapered rollers 65 in the tapered roller bearing 60 are in contact with both the inner ring 61 and the outer ring 63.

When a radial load acts on the tapered roller bearing 60 from a direction, the maximum radial load produced in the tapered roller bearing 60 when the preload is smaller than the proper preload value is larger than the maximum radial load produced in the tapered roller bearing 60 when the preload is at the proper preload value. When a radial load acts on the tapered roller bearing 60 from a direction, the maximum radial load produced in the tapered roller bearing 60 when the preload is larger than the proper preload value is larger than the maximum radial load produced in the tapered roller bearing 60 when the preload is at the proper preload value. In other words, the maximum radial load produced in the tapered roller bearing 60 can be minimized when the preload is at the proper preload value.

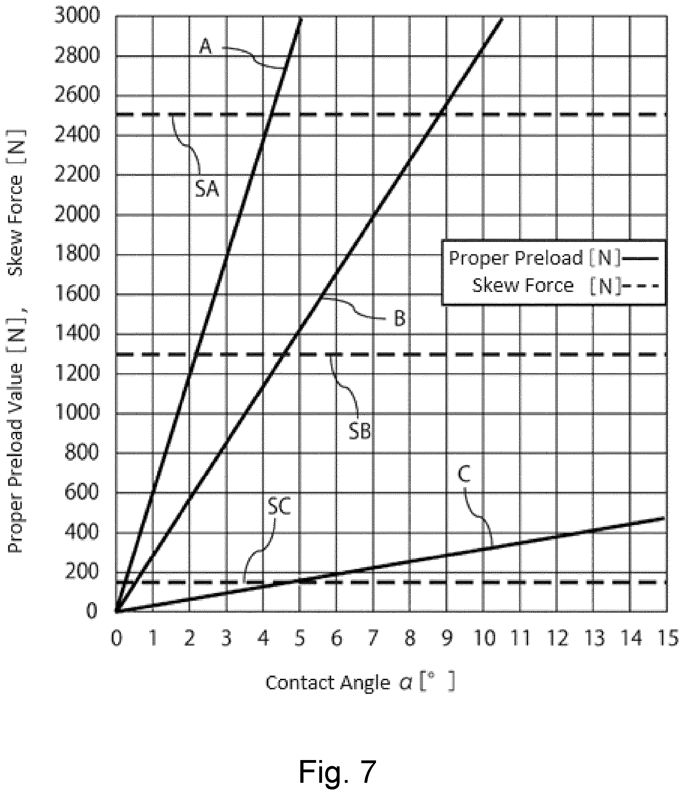

Fig. 7 shows the results of study of the proper preload values for the three examples A to C of the tapered roller bearing 60. The examples A to C of the tapered roller bearing 60 shown in Fig. 7 are tapered roller bearings 60 intended for application to three speed reducers that are actually manufactured. The example A, which is intended for application to a larger, high-power speed reducer 10, is a tapered roller bearing with a relatively large capacity. As shown in Fig. 7, the proper preload value is larger for the example A, which is intended for application to a larger, high-power speed reducer 10. The example C, which is intended for application to a smaller, low-power speed reducer 10, is a tapered roller bearing with a relatively small capacity. As shown in Fig. 7, the proper preload value is smaller for the example C, which is intended for application to a smaller, low-power speed reducer 10.

Fig. 7 shows the variation of the proper preload values in accordance with the contact angle $\alpha$ for the three examples A to C of the tapered roller bearing 60. In the tapered roller bearings evaluated in Fig. 7, the thickness T60 of the tapered roller bearing 60, the configuration of the tapered rollers 65, and the pitch circle diameter PCD were kept constant, regardless of the variation of the contact angle $\alpha$. On the other hand, the thickness of the inner ring 61 and the thickness of the outer ring 63 were varied in accordance with the variation of the contact angle $\alpha$.

In the examples of the tapered roller bearing 60 intended for application to the illustrated speed reducers, the following have been confirmed with respect to the contact angle $\alpha$ and the proper preload value. As the contact angle $\alpha$ is larger, the proper preload value is larger. As the contact angle $\alpha$ is smaller, the proper preload value is smaller. The theoretical value of the proper preload value (N) is directly proportional to the contact angle $\alpha$ (°). As the capacity of the tapered roller bearing 60 is larger, the slope of the proper preload value relative to the contact angle $\alpha$ is larger.

As in the speed reducer 10 shown in Figs. 1 to 3, two tapered roller bearings 60A and 60B may be provided in opposite orientations to support the same shaft member. In this example, a preload is applied to pressurize the two tapered roller bearings 60A and 60B toward each other. The preload applied to the two tapered roller bearings 60A and 60B should preferably be larger than the thrust load applied to the two tapered roller bearings 60A and 60B. More preferably, the proper preload value applied to the two tapered roller bearings 60A and 60B is larger than the thrust load applied to the two tapered roller bearings 60A and 60B. In this case, when a thrust load occurs, the inner ring 61 and the outer ring 63 in each of the bearings 60A and 60B are kept pressurized toward each other. Therefore, abnormalities such as rattling and vibration of the tapered roller bearing 60 during its use can be suppressed, and the life of the tapered roller bearing 60 and the life of the speed reducer 10 having the tapered roller bearing 60 built therein can be extended stably.

In the speed reducer 10 shown in Figs. 1 to 3, the tapered roller bearings 60A and 60B are subjected to the skew forces generated in the cylindrical roller bearings 70A and 70B as thrust loads. The skew forces generated in the cylindrical roller bearings 70A and 70B are about 5% of the radial loads applied to the cylindrical roller bearings 70A and 70B. In the speed reducer 10, the radial loads applied to the cylindrical roller bearings 70A and 70B are about 3000 N to 50000 N. Therefore, as shown in Fig. 7, the skew force generated in the cylindrical roller bearing 70 during operation of the speed reducer 10 is about 150 N to 2500 N.

Fig. 7 shows the skew forces SA to SC generated in the examples of the speed reducer 10 with dotted lines. The skew force SA is the skew force in the speed reducer 10 having the tapered roller bearing of the example A described above. The skew force SB is the skew force in the speed reducer 10 having the tapered roller bearing of the example B described above. The skew force SC is the skew force in the speed reducer 10 having the tapered roller bearing of the example C described above.

As shown in Fig. 7, when the contact angle $\alpha$ is 5° or larger, the proper preload value for the tapered roller bearing 60 built in the speed reducer 10 is larger than the skew force generated in the cylindrical roller bearing 70 built in the speed reducer 10. Therefore, with the contact angle $\alpha$ of 5° or larger, the tapered roller bearing 60 can have a more adequate thrust load carrying capacity. According to this example, it is possible to effectively prevent release of the preload from the tapered roller bearing 60 caused by generation of the thrust load. Therefore, abnormalities such as rattling and vibration in the tapered roller bearing 60 can be suppressed during operation of the speed reducer 10. Suppressing such abnormalities extends stably the life of the tapered roller bearing 60 and the life of the speed reducer 10 having the tapered roller bearing 60 built therein.

In this regard, the contact angle $\alpha$ may be from 5° to 10°, from 5° to 8°, or from 5° to 7°.

The dimensions of the tapered roller bearing 60 applied to the speed reducer 10 shown in Figs. 1 to 3 may be determined as described below. The tapered roller bearing 60 with the dimensions described below will produce, when applied to the speed reducer 10, more effective and more stable effects of the contact angle $\alpha$ of 3° to 10° described above. In other words, the radial load carrying capacity of the tapered roller bearing can be improved more effectively and more stably while maintaining the required thrust load carrying capacity stably.

The inner diameter D60a of the tapered roller bearing 60 may be from 9.4 mm to 60 mm, from 20 mm to 50 mm, or from 25 mm to 45 mm. As shown in Fig. 4, the inner diameter D60a of the tapered roller bearing 60 is the inside diameter of the tapered roller bearing 60. In the illustrated example, the inner diameter D60a of the tapered roller bearing 60 is the inside diameter of the tapered roller bearing 60 defined by the inner circumferential surface 62a of the inner ring 61.

The outer diameter D60b of the tapered roller bearing 60 may be from 24 mm to 130 mm, from 40 mm to 115 mm, or from 55 mm to 100 mm. As shown in Fig. 4, the outer diameter D60b of the tapered roller bearing 60 is the outside diameter of the tapered roller bearing 60. In the illustrated example, the outer diameter D60b of the tapered roller bearing 60 is the outside diameter of the tapered roller bearing 60 defined by the outer circumferential surface 64b of the outer ring 63.

The thickness T60 of the tapered roller bearing 60 may be from 7.3 mm to 35 mm, from 10 mm to 32.5 mm, or from 15 mm to 27.5 mm. As described above, the thickness T60 is the length in the radial direction DR. In the illustrated example, the thickness T60 is the distance along the radial direction DR between the inner circumferential surface 62a of the inner ring 61 and the outer circumferential surface 64b of the outer ring 63.

The diameter D65a of the tapered rollers 65 at the small end surface 66a (see Fig. 5) may be from 3.0 mm to 13.7 mm, from 4.5 mm to 12 mm, or from 6.0 mm to 10.5 mm.

The diameter D65b of the tapered rollers 65 at the large end surface 66b (see Fig. 5) may be from 3.5 mm to 14.4 mm, from 5.0 mm to 13 mm, or from 6.5 mm to 11.5 mm.

The length L65 of the tapered rollers 65 may be from 6.8 mm to 33.7 mm, from 10 mm to 30 mm, or from 13 mm to 27 mm. As shown in Fig. 5, the length L65 of the tapered rollers 65 is the length of the tapered rollers 65 along the central axis CA.

With lower limits set for the thickness T60 of the tapered roller bearing 60, the diameters D65a and D65b of the tapered rollers 65, and the length L65 of the tapered rollers 65, the radial load carrying capacity of the tapered roller bearing 60 can be improved. With upper limits set for the thickness T60 of the tapered roller bearing 60, the diameters D65a and D65b of the tapered rollers 65, and the length L65 of the tapered rollers 65, the tapered roller bearing 60 can be downsized.

Therefore, it is also possible to set a lower limit for the product (T60 × L65) of the thickness T60 (mm) of the tapered roller bearing 60 and the length L65 (mm) of the tapered rollers 65. With a lower limit set for the product of the thickness T60 and the length L65 (T60 × L65), the radial load carrying capacity of the tapered roller bearing 60 can be improved more stably. With an upper limit set for the product of the thickness T60 and the length L65 (T60 × L65), the tapered roller bearing 60 can be downsized more effectively. The product of the thickness T60 (mm) of the tapered roller bearing 60 and the length L65 (mm) of the tapered rollers 65 may be from 50 to 1400, from 58 to 1200, from 100 to 980, or from 200 to 740.

Similarly, it is also possible to set a lower limit for the product (D65a × L65) of the diameter D65a (mm) of the small end surface 66a of the tapered rollers 65 and the length L65 (mm) of the tapered rollers 65. With a lower limit set for the product of the diameter D65a and the length L65 (D65a × L65), the radial load carrying capacity of the tapered roller bearing 60 can be improved more stably. With an upper limit set for the product of the diameter D65a and the length L65 (D65a × L65), the tapered roller bearing 60 can be downsized more effectively. The product (D65a × L65) of the diameter D65a (mm) of the small end surface 66a of the tapered rollers 65 and the length L65 (mm) of the tapered rollers 65 may be from 20 to 550, from 24 to 460, from 45 to 360, or from 78 to 280.

The illustrated speed reducer 10 is configured as follows. The tapered roller bearing 60 is constituted by the first tapered roller bearing 60A and the second tapered roller bearing 60B arranged in this order in the axial direction D1 parallel to the rotation axis RA of the shaft member 50. The cylindrical roller bearing 70 is constituted by the first cylindrical roller bearing 70A and the second cylindrical roller bearing 70B positioned between the two tapered roller bearings 60A and 60B in the axial direction D1. The external gear 40 is constituted by the first external gear 40A, supported by the first cylindrical roller bearing 70A, and the second external gear 40B, supported by the second cylindrical roller bearing 70B. The first tapered roller bearing 60A includes the tapered rollers 65 inclined so as to be away from the rotation axis RA on the side closer to the second tapered roller bearing 60B in the axial direction D1. The second tapered roller bearing 60B includes the tapered rollers 65 inclined so as to be away from the rotation axis RA on the side closer to the first tapered roller bearing 60A in the axial direction D1.

In the speed reducer 10 having this configuration, the shaft member 50 is rotatably supported by the two tapered roller bearings 60A and 60B. The shaft member 50 receives a radial load from the first external gear 40A via the first cylindrical roller bearing 70A. The shaft member 50 receives a radial load from the second external gear 40B via the second cylindrical roller bearing 70B.

The direction of the radial load applied from the first external gear 40A to the shaft member 50 varies with the rotation of the shaft member 50. The direction of the radial load applied from the second external gear 40B to the shaft member 50 varies with the rotation of the shaft member 50. The radial load applied from the first external gear 40A to the shaft member 50 is directed differently from the radial load applied from the second external gear 40B to the shaft member 50. In the illustrated example, the radial load applied from the first external gear 40A to the shaft member 50 is directed opposite to the radial load applied from the second external gear 40B to the shaft member 50.

Therefore, the loads acting from the shaft member 50 onto the first and second tapered roller bearings 60A and 60B vary periodically. As the variation width of the magnitude of the load varying periodically, i.e., the amplitude of the load, increases, the tapered roller bearing 60 is more susceptible to fatigue fracture, even if the absolute value of the load is small.

To address this problem, it is effective to increase the bearing span L60 relative to the arrangement pitch AP40 of the first and second external gears 40A and 40B in the axial direction D1. With the increased bearing span L60, the amplitude of the load applied to the tapered roller bearings 60A and 60B can be reduced. The bearing span L60 is the distance along the axial direction D1 between the point of action P60 of the first tapered roller bearing 60A and the point of action P60 of the second tapered roller bearing 60B. However, for downsizing the speed reducer 10, the bearing span L60 should not be too large relative to the arrangement pitch AP40. The bearing span L60 may be 2 to 5 times, 2.5 to 4.5 times, or 3 to 4 times as large as the arrangement pitch AP40.

As described above, the tapered roller bearing 60 according to the embodiment has a contact angle $\alpha$ of 3° to 10°. The tapered roller bearing 60 according to the embodiment includes the inner ring 61, the tapered rollers 65, and the outer ring 63 that holds the tapered rollers 65 with the inner ring 61 at the contact angle of 3° to 10°. The tapered roller bearing 60 according to the embodiment includes the inner ring 61 having the outer circumferential surface 62b, the tapered rollers 65, and the outer ring 63 having the inner circumferential surface 64a at the contact angle of 3° to 10° and holding the tapered rollers 65 between the outer circumferential surface 62b and the inner circumferential surface 64a.

The speed reducer 10 according to the embodiment includes the external gear 40, the shaft member 50 that eccentrically oscillates the external gear 40, the carrier 30 that rotatably supports the shaft member 50, the cylindrical roller bearing 70 disposed between the external gear 40 and the shaft member 50, and the tapered roller bearing 60 disposed between the carrier 30 and the shaft member 50 and having the contact angle $\alpha$ of 3° to 10°.

In the tapered roller bearing 60 and the speed reducer 10 according to the embodiment, the contact angle $\alpha$ of the tapered roller bearing 60 is 3° to 10°. With the contact angle $\alpha$ set to 10° or less, which is smaller than the conventional values, it is possible to increase the thickness of the inner ring 61, increase the thickness of the outer ring 63, increase the diameters D65a and D65b of the tapered rollers 65, and increase the diameter PCD of the circumference in which the tapered rollers 65 are located, without enlarging the space for installation of the tapered roller bearing 60. In other words, with a small contact angle $\alpha$, the radial load carrying capacity can be improved while maintaining the space for installation of the tapered roller bearing 60. With the lower limit of the contact angle $\alpha$ set to 3°, it is possible to inhibit the thrust load from affecting the life of the tapered roller bearing 60. In other words, it is possible to improve the radial load carrying capacity of the tapered roller bearing 60 while providing the tapered roller bearing 60 with the required thrust load carrying capacity. As a result, the life of the tapered roller bearing 60 and the speed reducer 10 can be extended.

In one example of the embodiment described above, the contact angle $\alpha$ may be 5° or larger. When the lower limit of the contact angle $\alpha$ is set to 5°, the proper preload value to be applied to the tapered roller bearing 60 can be larger than the skew force that may be applied from the cylindrical roller bearing 70 to the tapered roller bearing 60. Therefore, it is possible to suppress vibration and other abnormalities occurring in the tapered roller bearing 60 due to the complete release of preload from the tapered roller bearing 60. This inhibits unintentionally large loads from being applied to the tapered roller bearing 60 during use. Unexpected damage to the tapered roller bearing 60 and the speed reducer 10 can be inhibited.

While the embodiment has been described with reference to the specific example, the example is not intended to limit the embodiment. The foregoing embodiment can be implemented in various other specific forms and is susceptible to omission, replacement, and modification of various elements thereof within the purport of the invention.

For example, the tapered roller bearing 60 is applied to the speed reducer having two or more shaft members 50 in the above-described example, but the present embodiment is not limited to such. The tapered roller bearing 60 may be applied to a speed reducer having only one shaft member 50 disposed on the rotation axis MRA.

In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

**LIST OF REFERENCE NUMBERS**

10: speed reducer, 30: carrier, 40, 40A, 40B: external gear, 50: shaft member, 60, 60A, 60B: tapered roller bearing, 61: inner ring, 63: outer ring, 65: tapered roller, 66a: small end surface, 70, 70A, 70B: cylindrical roller bearing, $\alpha$: contact angle

**Claims**

1. A tapered roller bearing (60) comprising:

   an inner ring (61) having an outer circumferential surface (62b);
   tapered rollers (65); and
   an outer ring (63) having an inner circumferential surface (64a) with a contact angle ($\alpha$) of 3° to 10° and holding the tapered rollers (65) between the outer circumferential surface (62b) and the inner circumferential surface (64a).

2. The tapered roller bearing (60) of claim 1, wherein the contact angle ($\alpha$) is 5° or larger.

3. The tapered roller bearing (60) of claim 1, wherein the contact angle ($\alpha$) is 8° or smaller.

4. The tapered roller bearing (60) of any one of claims 1 to 3, wherein a product of a thickness (T60) (mm) in a radial direction (DR) and a length (L65) (mm) of the tapered rollers (65) is 50 to 1400.

5. The tapered roller bearing (60) of any one of claims 1 to 4, wherein a product of a diameter (D65a) (mm) at a small end surface (66a) of the tapered rollers (65) and a length (L65) (mm) of the tapered rollers (65) is 20 to 550.

6. A speed reducer (10) comprising:

   an external gear (40);
   a shaft member (50) for eccentrically oscillating the external gear (40);
   a carrier (30) rotatably supporting the shaft member (50);
   a cylindrical roller bearing (70) disposed between the external gear (40) and the shaft member (50); and
   the tapered roller bearing (60) of any one of claims 1 to 5, disposed between the carrier (30) and the shaft member (50).

7. The speed reducer (10) of claim 6,

   wherein the tapered roller bearing (60) includes a first tapered roller bearing (60A) and a second tapered roller bearing (60B) arranged in an axial direction (D1) parallel to a rotation axis (RA) of the shaft member (50),
   wherein the cylindrical roller bearing (70) includes a first cylindrical roller bearing (70A) and a second cylindrical roller bearing (70B) disposed between the first tapered roller bearing (60A) and the second tapered roller bearing (60B) in the axial direction (D1),
   wherein the external gear (40) includes a first external gear (40A), supported by the first cylindrical roller bearing (70A), and a second external gear (40B), supported by the second cylindrical roller bearing (70B),
   wherein the first tapered roller bearing (60A) includes tapered rollers (65) having a central axis (CA) inclined so as to be away from the rotation axis (RA) on a side closer to the second tapered roller bearing (60B) in the axial direction (D1), and
   wherein the second tapered roller bearing (60B) includes tapered rollers (65) having a central axis (CA) inclined so as to be away from the rotation axis (RA) on a side closer to the first tapered roller bearing (60A) in the axial direction (D1).

8. The speed reducer (10) of claim 7, wherein a distance (L60) along the axial direction (D1) between a point of action (P60) of the first tapered roller bearing (60A) and a point of action (P60) of the second tapered roller bearing (60B) is two or more times as large as an arrangement pitch of the first external gear (40A) and the second external gear (40B) in the axial direction (D1).

Fig. 1

Fig. 2

Fig. 3

EP 4 506 580 A1

Fig. 4

Fig. 5

19

Fig. 6

Fig. 7

Europäisches
Patentamt

European
Patent Office

Office européen
des brevets

# EUROPEAN SEARCH REPORT

Application Number

EP 24 19 2891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/154860 A1 (HOFMANN HEINRICH [DE] ET AL) 18 June 2009 (2009-06-18) * paragraph [0013]; figure 1 * | 1-5 | INV. F16C19/36 |
| X | WO 2012/130305 A1 (AMSC WINDTEC GMBH [AT]; GOEBEL WERNER [DE] ET AL.) 4 October 2012 (2012-10-04) * page 9, paragraph 3; figure 4 * | 1-5 | |
| X | EP 1 312 835 A2 (KOYO SEIKO CO [JP]) 21 May 2003 (2003-05-21) * paragraph [0024]; figure 3 * | 1,2,4,5 | |
| X | DE 100 49 511 A1 (NSK LTD [JP]) 4 October 2001 (2001-10-04) * paragraph [0069]; figure 2 * | 1,2,4,5 | |
| X | US 5 074 680 A (HOCH PAUL-GERHARD [DE] ET AL) 24 December 1991 (1991-12-24) * column 2, line 17 - line 18; figure 1 * * column 2, line 37 * | 1-8 | |
| | | | TECHNICAL FIELDS SEARCHED (IPC) |
| X | DE 602 05 198 T2 (KOYO SEIKO CO [JP]) 24 May 2006 (2006-05-24) * claim 1; figure 3 * | 1,2,4,5 | F16C |
| X | US 7 210 852 B2 (HANSEN TRANSMISSIONS INT [BE]) 1 May 2007 (2007-05-01) * column 2, line 63 - line 64; figure 6 * | 1-5 | |

The present search report has been drawn up for all claims

| Place of search | Date of completion of the search | Examiner |
|---|---|---|
| The Hague | 3 December 2024 | Vesselinov, Vladimir |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 2891

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2024

| Patent document cited in search report | | Publication date | Patent family member(s) | | Publication date |
|---|---|---|---|---|---|
| US 2009154860 | A1 | 18-06-2009 | DE 102004055227 | A1 | 18-05-2006 |
| | | | EP 1812721 | A1 | 01-08-2007 |
| | | | KR 20070086290 | A | 27-08-2007 |
| | | | US 2009154860 | A1 | 18-06-2009 |
| | | | WO 2006053532 | A1 | 26-05-2006 |
| WO 2012130305 | A1 | 04-10-2012 | NONE | | |
| EP 1312835 | A2 | 21-05-2003 | DE 60205198 | T2 | 24-05-2006 |
| | | | EP 1312835 | A2 | 21-05-2003 |
| | | | JP 2003148596 | A | 21-05-2003 |
| DE 10049511 | A1 | 04-10-2001 | DE 10049511 | A1 | 04-10-2001 |
| | | | JP 2001304278 | A | 31-10-2001 |
| | | | US 6623165 | B1 | 23-09-2003 |
| | | | US 2004028305 | A1 | 12-02-2004 |
| US 5074680 | A | 24-12-1991 | DE 3912449 | A1 | 18-10-1990 |
| | | | FR 2645928 | A1 | 19-10-1990 |
| | | | GB 2231100 | A | 07-11-1990 |
| | | | JP H03140617 | A | 14-06-1991 |
| | | | US 5074680 | A | 24-12-1991 |
| DE 60205198 | T2 | 24-05-2006 | DE 60205198 | T2 | 24-05-2006 |
| | | | EP 1312835 | A2 | 21-05-2003 |
| | | | JP 2003148596 | A | 21-05-2003 |
| US 7210852 | B2 | 01-05-2007 | AT E338217 | T1 | 15-09-2006 |
| | | | AU 2002302877 | A1 | 24-09-2002 |
| | | | CN 1558994 | A | 29-12-2004 |
| | | | CN 1975186 | A | 06-06-2007 |
| | | | DE 60214350 | T2 | 18-10-2007 |
| | | | DK 1370780 | T3 | 02-01-2007 |
| | | | EP 1370780 | A2 | 17-12-2003 |
| | | | ES 2271251 | T3 | 16-04-2007 |
| | | | JP 4350375 | B2 | 21-10-2009 |
| | | | JP 2004521287 | A | 15-07-2004 |
| | | | US 2004136632 | A1 | 15-07-2004 |
| | | | US 2006117567 | A1 | 08-06-2006 |
| | | | US 2008304782 | A1 | 11-12-2008 |
| | | | WO 02073051 | A2 | 19-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022152790 A